# FASCICULE DE BREVET EUROPEEN

(11) **EP 2 683 632 B1**
(45) Date de publication et mention de la délivrance du brevet: **26.08.2015**
(21) Numéro de dépôt: 12707318.7
(22) Date de dépôt: 07.03.2012
(51) Int. Cl.: B65G 47/08, B65G 47/82, B65G 47/84, B65B 35/40, B65B 21/24

(54) **INSTALLATION DE GROUPEMENT DE RECIPIENTS A SECTION TRANSVERSALE CIRCULAIRE OU OVOIDE SOUS FORME DE PACKS**
ANLAGE ZUR GRUPPIERUNG VON BEHÄLTNISSEN MIT KREISFÖRMIGEM ODER EIFÖRMIGEM QUERSCHNITT UND IN FORM VON PACKUNGEN
INSTALLATION FOR GROUPING CONTAINERS WHICH HAVE A CIRCULAR OR OVOID CROSS SECTION AND ARE IN THE FORM OF PACKS

(30) Priorité: 07.03.2011 FR 1151821; 01.07.2011 US 201161503813 P
(43) Date de publication de la demande: 15.01.2014
(73) Titulaire: Gosset, François, 14100 Beuvillers (FR)
(72) Inventeur: Gosset, François, 14100 Beuvillers (FR)
(74) Mandataire: Blot, Philippe Robert Emile
(86) Numéro de dépôt international: PCT/EP2012/053862
(87) Numéro de publication internationale: WO 2012/120022

(56) Documents cités:
- WO-A1-2010/151384
- DE-U1- 20 306 926
- US-A1- 2010 012 462

## Description

L'invention concerne la manutention et le conditionnement des récipients à section transversale circulaire ou ovoïde, tels que des bouteilles en verre ou en matière plastique ou des cannettes métalliques ou des boîtes de conserves.

L'invention concerne en particulier une installation de groupement de récipients à section transversale circulaire ou ovoïde sous forme de packs selon le préambule de la revendication 1.

Les récipients de forme sensiblement cylindrique, en tout cas ceux présentant une section transversale circulaire ou plus ou moins ovoïde, tels que des bouteilles en verre ou en matière plastique ou des cannettes métalliques ou des boîtes de conserves, sont souvent expédiés aux clients par les usines de conditionnement sous forme de packs renfermant de multiples tels récipients, enveloppés dans un film en matière plastique. Ces packs comprennent souvent 6, 8, 12, 24 récipients ou davantage.

Le plus normalement, les récipients sont disposés au contact les uns des autres en lignes et colonnes formant une matrice, c'est-à-dire avec des lignes et colonnes successives se faisant rigoureusement face. Dans un tel arrangement, les récipients ont au maximum 4 points de contacts avec les récipients immédiatement voisins. Mais on conçoit aisément que plus le nombre de récipients est élevé, plus il est difficile de conserver une telle disposition « en matrice », car la stabilité du pack devient insuffisante. Les récipients tendent à se mettre dans une disposition qu'on qualifiera dans la suite du texte de disposition « en quinconce », c'est à dire dans laquelle chaque ligne ou chaque colonne est décalée d'un demi-diamètre de récipient par rapport à la ligne ou à la colonne immédiatement voisine. Ce déplacement des récipients déforme le pack, et le film de plastique ne l'enveloppe plus que de manière lâche. Les récipients peuvent alors s'en échapper.

Une parade à ce problème consiste à disposer les récipients, avant leur enrobage par le film, sur une barquette présentant des rebords, ou sur une plaque, ce qui empêche plus ou moins les récipients de se déplacer. Le film enrobe à la fois les récipients et la plaque ou la barquette. Mais cette solution est coûteuse et complique le conditionnement des packs. Se pose également le problème du recyclage de la plaque ou de la barquette après le déballage du pack, car elle doit suivre une voie différente de celle suivie par le film plastique.

Ces inconvénients conduisent souvent à éviter de réaliser des packs contenant un grand nombre de récipients disposés en matrice.

Dans certains cas, on fait donc le choix de disposer les récipients en quinconce, de manière délibérée, avant leur enrobage par le film. On obtient ainsi des packs qui, certes, n'ont pas un périmètre très régulier, mais le film plastique reste en contact avec tous les récipients situés à la périphérie du pack. L'expérience montre qu'ils peuvent présenter néanmoins une rigidité suffisante, une fois enrobés, pour que leur transport puisse s'effectuer sans risques qu'un récipient ne s'échappe du pack. Pour cela, il suffit que le film enserre les récipients au contact duquel il se trouve avec suffisamment de pression. Cette pression est transmise par les récipients qui y sont soumis aux récipients avec lesquels ils sont en contact à travers les 6 points de contacts que chaque récipient possède avec ses voisins, et globalement le pack présente alors une rigidité adéquate, sans qu'il soit nécessaire de disposer les récipients sur une plaque ou une barquette.

Par exemple, pour un pack de 24 récipients, une disposition optimale en termes de rigidité et d'encombrement du pack consiste à répartir les récipients en sept colonnes successives de, respectivement, 3, 4, 3, 4, 3, 4, 3 récipients.

A cet effet, les récipients arrivent en vrac ou en colonnes sur l'installation de conditionnement. Puis ils sont répartis en quinconce, de façon naturelle ou forcée, selon des colonnes ordonnées. On isole des rangées de récipients qu'on tasse les uns sur les autres au moyen, par exemple, de guides conformés de façon adéquate, de façon à les répartir en colonnes de 3 et 4 récipients alternativement. Puis on procède à l'enrobage.

Le document WO-A-98/45186 décrit un procédé de conditionnement aboutissant à des packs de récipients disposés en quinconce. Les récipients arrivent dans l'installation disposés en colonnes renfermant chacune un nombre déterminé de récipients, qui est initialement différent selon la colonne concernée. Un système à poussoir présentant des cales décale une colonne sur deux par rapport à leurs colonnes voisines, puis des guides latéraux resserrent les colonnes pour créer un arrangement en quinconce où alternent des colonnes comportant un nombre pair de récipients et un nombre impair de récipients. Les colonnes extrêmes du pack ont un nombre pair de récipients, ce qui, pour un pack de 24 récipients, ne correspond pas à la disposition optimale citée plus haut dans laquelle, au contraire, les colonnes extrêmes ont un nombre impair de récipients.

Le document US-A-2010/0012462 présente une installation de groupement de récipients à section transversale circulaire ou ovoïde sous forme de packs selon le préambule de la revendication 1 et un dispositif de conditionnement de récipients qui peut aboutir à la disposition optimale citée plus haut pour des packs de 24 récipients. Il nécessite, toutefois, de disposer les récipients dans des couloirs bien délimités pour faciliter leur disposition en quinconce, et le décalage des colonnes par des poussoirs a lieu dans ces couloirs, avant que deux guides latéraux ne resserrent les récipients les uns sur les autres pour leur conférer leur disposition finale.

De manière générale, les dispositifs de conditionnement que l'on vient de décrire, ainsi que les dispositifs similaires de l'art antérieur, ont l'inconvénient d'être mécaniquement complexes. Ils nécessitent deux systèmes d'ordonnancement et de sélection préalable des récipients, qui les répartissent en colonnes dont le nombre de récipients doit être soigneusement individualisé et maîtrisé, car les colonnes sont consommées chacune à un rythme différent. Si ce nombre n'est pas maîtrisé, il y a un risque de défaut d'alimentation de certaines colonnes : les colonnes qui se vident le plus vite pourront ne pas être toujours réapprovisionnées de façon adéquate. La gestion de l'installation s'avère donc complexe. Et l'adaptation du procédé à toute machine de conditionnement existante conçue initialement pour réaliser des packs en matrice n'est pas possible.

Le but de l'invention est de procurer aux conditionneurs de récipients sensiblement cylindriques la possibilité de réaliser de façon aisée et adaptable à toute installation de conditionnement un arrangement des récipients selon le schéma optimal en quinconce décrit plus haut.

A cet effet, l'invention a pour objet une installation de groupement de récipients à section transversale circulaire ou ovoïde sous forme de packs en colonnes disposées en quinconce avant leur enrobage selon la revendication 1.

Lesdits moyens pour pousser au moins un desdits récipients peuvent être constitués par un organe de poussée escamotable disposé sur un côté de l'installation.

Lesdits moyens pour pousser au moins un desdits récipients peuvent être constitués par un organe de poussée accompagnant ledit pack en défilement pendant ledit réarrangement.

L'installation peut comporter des moyens pour arrêter le défilement du pack lors dudit réarrangement.

Elle peut comporter des parois pour délimiter le parcours du pack, et l'une desdites parois présente localement un décalage l'éloignant de l'autre paroi pour permettre la création de ladite colonne supplémentaire dans le pack.

Comme on l'aura compris, l'invention consiste à réaliser d'abord, de façon connue, un disposition des récipients du pack en quinconce par un système de poussoirs à cales et, éventuellement, de parois latérales de guidage, ou tout autre moyen fonctionnellement équivalent puis à pousser au moins un des récipients frontaux du pack pour que, de proche en proche, un décalage adéquat des récipients soit obtenu. A cet effet, les parois latérales, si elles sont présentes dans la zone où a lieu le décalage, doivent autoriser ce décalage sur l'un des côtés du pack, de façon à permettre la constitution dans le pack d'une colonne de récipients supplémentaire. Le résultat est que le pack final présente une alternance de colonnes en quinconce, comportant dans certains cas un nombre n et un nombre n+1 de récipients dans deux colonnes voisines.

L'invention sera mieux comprise à la lecture de la description qui suit, donnée en référence aux figures annexées suivantes :
- la figure 1 qui montre schématiquement vue de profil un exemple d'installation de conditionnement de récipients cylindriques selon l'invention ;
- la figure 2 qui montre schématiquement la même installation vue de dessus ;
- les figures 3 à 8 qui montrent différents exemples de dispositions de récipients qu'il est possible de réaliser par le dispositif selon l'invention, à différents stades de leur procédé d'obtention, en fonction du nombre de récipients contenus dans un pack.

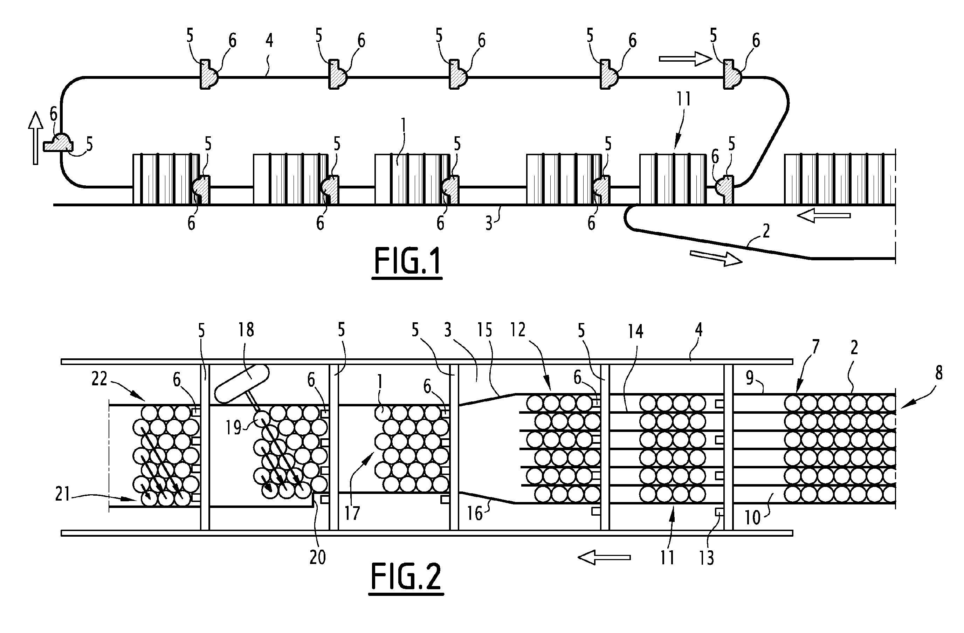

L'installation selon l'invention pour le conditionnement de récipients 1 en packs de 24 représentée sur les figures 1 et 2 comporte classiquement une bande transporteuse 2 qui amène les récipients 1 sur un tapis 3 pouvant, lui, éventuellement, être fixe (si les récipients 1, lorsqu'ils sont poussés, peuvent se déplacer sur lui avec un faible frottement, donc sans être déséquilibrés). Il comporte également une bande défilante 4 située au-dessus du tapis 3. Cette bande défilante 4 comporte un certain nombre de poussoirs 5 portant des cales 6 dont la fonction sera vue plus loin.

Lorsque les récipients 1 sont sur la bande transporteuse 2, ils sont disposés en lignes 7 et en colonnes 8 (il y a 6 telles colonnes 8 dans l'exemple représenté). Les colonnes 8 sont matérialisées, de préférence mais pas obligatoirement, par des parois 9 définissant des couloirs 10. Les colonnes 8 peuvent tout à fait présenter chacune un nombre égal de récipients 1. Il n'est pas nécessaire, contrairement à ce qui se passe sur les installations de l'art antérieur représenté par WO-A-98/45186, de gérer l'installation pour que le nombre de récipients 1 constituant chaque colonne 8 soit rigoureusement individualisé. Cela simplifie donc grandement la gestion de l'approvisionnement du dispositif selon l'invention.

Après que les récipients 1 ont été déposés sur le tapis 3 par la bande transporteuse 2 sous forme de colonnes 8 et de lignes 7 formant généralement une matrice 11 plus ou moins rigoureuse, la ligne postérieure de la matrice 11 est mise au contact d'un poussoir 5 et de ses cales 6, les cales 6 étant situées face à une colonne de récipients de préférence (mais pas toujours nécessairement) un sur deux, en alternance. Le poussoir 5 et les cales 6 transforment la disposition en matrice 11 des récipients 1 en une disposition en quinconce 12, du fait que les cales 6 font avancer les colonnes 8 de récipients qu'elles affectent d'une longueur sensiblement égale à un demi-diamètre de récipient 1. Chaque récipient 1 de la partie arrière du pack disposé en quinconce 12 est donc au contact soit du poussoir 5, soit d'une cale 6, deux récipients de colonnes voisines de l'arrière du pack étant de préférence (mais pas toujours nécessairement) l'un au contact du poussoir 5, l'autre au contact d'une cale 6.
On peut remarquer que, dans le cas représenté sur la figure 2 que chaque poussoir 5 comporte à l'une de ses extrémités latérales une cale 13 qui, initialement, n'est au contact d'aucun récipient 1. Sa fonction sera vue plus loin.

Dans l'exemple représenté, le pack 12 en quinconce poursuit sa progression sur le tapis 3, poussé par le poussoir 5 et ses cales 6, les récipients 1 étant maintenus dans des couloirs par des parois 14. A un stade donné de la progression, les parois 14 sont interrompues, à l'exception des parois 15, 16 les plus latérales qui se mettent à converger de façon à resserrer les récipients 1 les uns contre les autres, tout en maintenant leur disposition en quinconce. On obtient ainsi un pack 17 quinconcé dans lequel les récipients 1 de lignes et de colonnes voisines sont directement au contact les uns des autres.

Puis, selon l'invention, un organe de poussée escamotable 18 situé sur l'un des côtés du tapis 3 exerce une poussée sur l'un 19 des récipients 1. Dans l'exemple représenté, il s'agit de celui de la ligne la plus frontale du pack en quinconce 17 qui est le plus proche de l'organe de poussée 18. Sous l'effet conjugué de cette poussée et de l'avancement du pack 17, de proche en proche plusieurs récipients 1 se décalent les uns par rapport aux autres tout en restant en contact mutuel. Egalement, la paroi latérale 16 située du côté opposé à l'organe de poussée 18 présente un décalage 20 l'éloignant de sa symétrique 15 située du côté de l'organe de poussée 18, de façon à autoriser, lors du décalage des récipients 1 du pack 17, la création d'une colonne 21 supplémentaire. Cette colonne supplémentaire 21 peut venir au contact de la cale 13 du poussoir 5 qui était, jusqu'à présent, inutilisée, et qui peut dès lors, comme les autres cales 6, contribuer au déplacement du pack 17. On aboutit ainsi à la formation d'un nouveau pack quinconcé 22 de 24 récipients 1, comportant, dans l'exemple représenté, 7 colonnes de récipients 1 présentant en alternance respectivement 3, 4, 3, 4, 3, 4 et 3 récipients 1, selon la configuration qui garantit une compacité et une rigidité maximale d'un pack de 24 récipients 1. Ce pack quinconcé 22 n'a plus, ensuite, qu'à être enveloppé dans un film plastique selon la pratique habituelle.

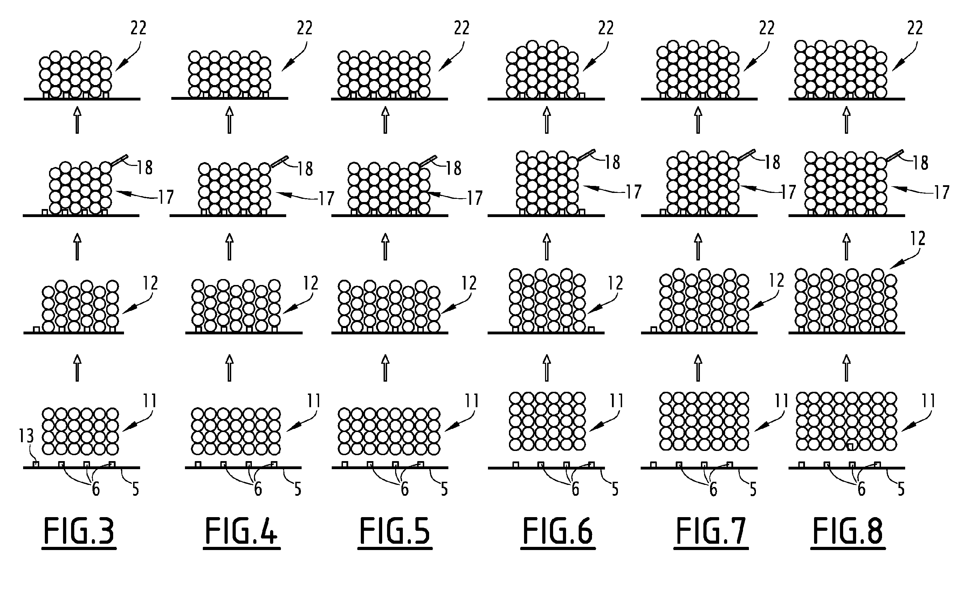

Les exemples des figures 3 à 8 montrent l'évolution de la disposition des récipients 1 du pack au fur et à mesure de sa progression dans l'installation selon l'invention, pour des packs comportant 24 récipients 1 (figure 3), 28 récipients 1 (figure 4), 32 récipients 1 (figure 5), 30 récipients 1 (figure 6) 35 récipients 1 (figure 7) et 40 récipients 1 (figure 8). Bien entendu, ces exemples ne sont pas limitatifs. On remarque que dans les cas des figures 6 à 8, les deux colonnes du pack final 22 qui étaient les plus proches de l'organe de poussée 18 ont le même nombre de récipients 1. Donc, l'alternance systématique de colonnes de n et n+1 récipients 1 n'est pas, dans l'esprit de l'invention, une généralité absolue pour tous les arrangements. Egalement, on voit que dans certains exemples, ce n'est pas forcément un récipient de la colonne la plus latérale ou de la ligne la plus frontale qu'il faut pousser pour obtenir la disposition visée. Enfin, tous les cas représentés ne nécessitent pas la présence sur le poussoir 5 d'une cale 13 initialement inutilisée.

Dans l'exemple décrit, l'organe de poussée 18 doit être escamotable de façon à n'exercer son action qu'à un moment unique de la progression du pack 17, et sur un récipient 19 unique de ce pack 17. Un organe 18 non escamotable agirait successivement sur plusieurs récipients 1 de la colonne 8 la plus latérale du pack 17 en défilement, et l'effet recherché ne serait pas obtenu.

Avantageusement, l'organe de poussée 18 peut être mobile dans la direction de progression du pack 17 en cours de réarrangement de façon à accompagner le récipient 19, sur lequel il exerce son effort, sur une partie de sa progression. Une telle caractéristique est particulièrement recommandée lorsque les récipients ont un poids relativement important et que leur glissement sur le tapis 3 s'effectue avec un frottement qui peut ralentir leur déplacement.

En plus ou à la place de cette mobilité, l'organe de poussée 18 peut exercer son action sur plusieurs des récipients 1 de la ligne la plus frontale du pack 17 pour faciliter le déplacement de tous les récipients 1 qui doivent être concernés.

Après que l'organe de poussée 18 mobile a rempli sa fonction, il est ramené à sa position initiale pour exercer son action sur le pack 17 suivant.

Une solution alternative à celle qui vient d'être décrite consiste à réaliser le réarrangement du pack 17 alors que celui-ci n'est plus en mouvement sur le tapis 3, et à équiper l'installation d'un organe de poussée exerçant une action sur plusieurs des récipients 1 du pack 17. L'arrêt du défilement du pack 17 peut être obtenu par l'arrêt du défilement du tapis 3 (si celui-ci est mobile), et dans tous les cas par un arrêt du défilement de la bande 4 portant les poussoirs 5.

La présence des parois 15, 16 dans la zone de l'installation où on procède au réarrangement du pack 17 n'est pas forcément indispensable. Elle est seulement conseillée pour garantir une stabilité et une bonne répartition des récipients 1. L'essentiel est que ledit réarrangement donnant lieu à la création d'une colonne supplémentaire soit possible, soit parce que la paroi 16 opposée à l'organe de poussée 18 présente le décalage 20 précédemment décrit, soit parce qu'à ce niveau la paroi 16 n'est pas ou plus présente, ce qui laisse les récipients 1 libres de se décaler comme désiré. Le choix entre ces diverses solutions pourra être fait en fonction des facilités de déplacement des récipients 1, compte tenu de leur poids et de leur coefficient de frottement sur le tapis 3.

Bien entendu, l'installation de groupement de récipients sous forme de packs selon l'invention peut être intégrée à une chaîne de conditionnement de récipients présentant un bien plus grand nombre de fonctions que le simple arrangement de la disposition des récipients.

Un avantage de l'invention est aussi que son adaptation à pratiquement toute installation classique de conditionnement de récipients sous forme de matrices est aisément réalisable.

Dans les exemples représentés, les récipients 1 ont des sections transversales strictement circulaires au niveau de leurs points de contact. Mais l'invention serait aussi applicable à des récipients de forme ovoïde autorisant donc leur disposition aisée sous la forme de colonnes en quinconce, dans lesquelles chaque récipient 1 (sauf ceux de la périphérie du pack 17) est au contact de 6 autres récipients 1.

## Revendications

1. Installation de groupement de récipients (1) à section transversale circulaire ou ovoïde sous forme de packs (17) en colonnes disposées en quinconce avant leur enrobage, comportant une bande transporteuse (2) amenant les récipients (1) en packs sur un tapis (3), une bande défilante (4) comportant des poussoirs (5) portant des cales (6) et des moyens pour disposer lesdits récipients (1) sous forme de colonnes en quinconce, **caractérisée en ce que** ladite installation comporte des moyens (18) pour pousser au moins un desdits récipients (1) disposés en quinconce de manière à créer par réarrangement du pack (17) une colonne supplémentaire (21) dans le pack (17).

2. Installation selon la revendication 1, **caractérisée en ce que** lesdits moyens (18) pour pousser au moins un desdits récipients (1) sont constitués par un organe de poussée escamotable disposé sur un côté de l'installation.

3. Installation selon la revendication 1 ou 2, **caractérisée en ce que** lesdits moyens (18) pour pousser au moins un desdits récipients (1) sont constitués par un organe de poussée accompagnant ledit pack (17) en défilement pendant ledit réarrangement.

4. Installation selon la revendication 1 ou 2, **caractérisée en ce qu'**elle comporte des moyens pour arrêter le défilement du pack (17) lors dudit réarrangement.

5. Installation selon l'une des revendications 1 à 4, **caractérisée en ce qu'**elle comporte des parois (15, 16) pour délimiter le parcours du pack (17), et **en ce que** l'une (16) desdites parois (15, 16) présente localement un décalage (20) l'éloignant de l'autre (15) paroi pour permettre la création de ladite colonne supplémentaire (21) dans le pack (17).

## Patentansprüche

1. Einrichtung zur Gruppierung von Behältern (1) mit kreisförmigem oder ovalem Querschnitt in der Form von Packs (17) von Spalten, die in Fünferanordnung angeordnet sind, vor ihrem Verpacken, aufweisend ein Transportband (2), welches die Behälter (1) in Packs auf eine Matte (3) fördert, ein Vorbeiziehband (4), welches Drücker (5) aufweist, die Schuhe (6) tragen, und Mittel zum Anordnen der besagten Behälter (1) in der Form der Spalten in Fünferanordnung, **dadurch gekennzeichnet, dass** die besagte Einrichtung Mittel (18) aufweist zum Drücken wenigstens eines der besagten Behälter (1), die in Fünferanordnung angeordnet sind, in einer Weise, um durch Neuanordnung des Packs (17) eine Zusatzspalte (21) in dem Pack (17) zu erzeugen.

2. Einrichtung gemäß Anspruch 1, **dadurch gekennzeichnet, dass** die besagten Mittel (18) zum Drücken wenigstens eines der besagten Behälter (1) von einem Drückorgan gebildet sind, das versenkbar an einer Seite der Einrichtung montiert ist.

3. Einrichtung gemäß Anspruch 1 oder 2, **dadurch gekennzeichnet, dass** die besagten Mittel (18) zum Drücken wenigstens eines der besagten Behälter (1) von einem Drückorgan gebildet sind, das den besagten Pack (17) begleitet beim Vorbeziehen während der besagten Neuanordnung.

4. Einrichtung gemäß Anspruch 1 oder 2, **dadurch gekennzeichnet, dass** sie Mittel aufweist zum Stoppen des Vorbeiziehens des Packs (17) während besagter Neuanordnung.

5. Einrichtung gemäß einem der Ansprüche 1 bis 4, **dadurch gekennzeichnet, dass** sie aufweist Wände (15, 16) zum Begrenzen der Bahn des Packs (17), und dass die eine (16) der besagten Wände (15, 16) lokal einen Versatz (20) hat, der sich von der anderen (15) Wand wegerstreckt zum Erlauben der Erzeugung der besagten Zusatzspalte (21) in dem Pack (17).

## Claims

1. An installation for grouping containers (1) which have a circular or ovoid cross-section and are in the form of packs (17) in staggered columns prior to their covering, including a conveyor belt (2) bringing the containers (1) in packs onto a mat (3), a moving belt (4) including pushing means (5) bearing shims (6) and means for positioning said containers (1) in staggered columns, **characterized in that** said installation comprises means (18) for pushing at least one of said containers (1) that are arranged in a staggered manner so as to create, by rearrangement of the pack (17), an additional column (21) in the pack (17).

2. The installation according to claim 1, **characterized in that** said means (18) for pushing at least one of said containers (1) are made up of a retractable pushing member positioned on one side of the installation.

3. The installation according to claim 1 or 2, **characterized in that** said means (18) for pushing at least one of said containers (1) are made up of a pushing member accompanying said pack (17) in its progression during said rearrangement.

4. The installation according to claim 1 or 2, **characterized in that** it includes means for stopping the progression of the pack (17) during said rearrangement.

5. The installation according to one of claims 1 to 4, **characterized in that** it includes walls (15, 16) for delimiting the travel of the pack (17), and **in that** one (16) of said walls (15, 16) locally has an offset (20) separating it from the other wall (15) to allow the creation of said additional column (21) in the pack (17).
